# EUROPÄISCHE PATENTSCHRIFT

(11) **EP 3 107 835 B1**
(45) Veröffentlichungstag und Bekanntmachung des Hinweises auf die Patenterteilung: **30.09.2020**
(21) Anmeldenummer: 15707569.8
(22) Anmeldetag: 16.02.2015
(51) Int. Cl.: B65D 85/804

(54) **KAPSEL MIT EINEM VORZUGSWEISE ROTATIONSSYMMETRISCH AUSGEBILDETEN KAPSELKÖRPER**
CAPSULE HAVING A PREFERABLY ROTATIONALLY SYMMETRICAL CAPSULE BODY
CAPSULE POURVUE D'UN CORPS, DE PRÉFÉRENCE À SYMÉTRIE DE RÉVOLUTION

(30) Priorität: 21.02.2014 CH 245142014
(43) Veröffentlichungstag der Anmeldung: 28.12.2016
(73) Patentinhaber: Delica AG, 4127 Birsfelden (CH)
(72) Erfinder: BRÖNNIMANN, Markus, CH-3274 Hermrigen (CH); AFFOLTER, Roland, CH-5103 Möriken (CH); PANOS, Alexander, CH-5032 Aarau Rohr (CH); BUGNARD, Guillaume, CH-4500 Solothurn (CH); GUGERLI, Raphael, CH-8904 Aesch (CH)
(74) Vertreter: Hepp Wenger Ryffel AG
(86) Internationale Anmeldenummer: PCT/EP2015/053205
(87) Internationale Veröffentlichungsnummer: WO 2015/124526

(56) Entgegenhaltungen:
- EP-A1- 1 440 908
- EP-A1- 1 579 792
- EP-A1- 1 864 917
- EP-A1- 2 444 339
- EP-A1- 2 537 779
- WO-A1-91/20170
- WO-A1-2012/117383
- WO-A1-2013/124811
- US-A1- 2008 026 121
- US-A1- 2008 028 946
- US-A1- 2010 064 898
- US-A1- 2011 064 852
- US-A1- 2014 004 231
- US-A1- 2014 020 565

## Beschreibung

Die vorliegende Erfindung betrifft eine Kapsel mit einem vorzugsweise rotationssymmetrisch ausgebildeten Kapselkörper gemäss dem Oberbegriff von Anspruch 1. Derartige Kapseln finden heute insbesondere für die Zubereitung von Kaffee oder Kaffeemischgetränken verbreitet Anwendung.

Die Kapsel bildet eine Portionsverpackung für den Transport und für die Lagerung der darin enthaltenen Substanz und gleichzeitig spielt die Ausgestaltung der Kapsel eine wichtige Rolle bei der Zubereitung des Getränks in einer entsprechenden Getränkezubereitungsmaschine. Derartige Maschinen arbeiten in der Regel mit einem hohen Betriebsdruck, wobei je nach Zubereitungsart und Substanz das Strömungsverhalten der Flüssigkeit in der Kapsel eine bedeutende Rolle spielt. Das Öffnen der Kapsel auf der Eintrittseite erfolgt üblicherweise durch Penetration des Deckels beim Einschliessen der Kapsel in die Getränkezubereitungsmaschine. Auf der Austrittseite kann die Öffnung der Kapsel ebenfalls durch Penetration erfolgen. Denkbar ist aber auch eine Öffnung durch Zerreissen einer Berstfolie oder durch Öffnen eines Ventils unter Druckeinwirkung.

Es ist grundsätzlich bereits bekannt, am Boden der Kapsel ein Strömungselement anzuordnen, um das Strömungsverhalten der Flüssigkeit zu beeinflussen. So zeigt beispielsweise die EP 1 555 219 eine Kapsel, bei welcher über dem Boden ein speziell ausgestaltetes Filterelement angeordnet ist. Der zur Kapselinnenseite gerichtete Rand des Filterelements ist auf der Aussenseite mit einem ringförmig umlaufenden Vorsprung versehen, mittels welchem das Filterelement klemmend in einer Nut an der Kapselseitenwand fixiert ist. Ersichtlicherweise kann so das Filterelement als separates Bauteil ausgebildet werden, das in den Kapselkörper eingerastet werden kann. Ein Nachteil dieser Konstruktion besteht jedoch darin, dass die Befestigung an der Seitenwand der Kapsel erfolgt. Das Strömungselement muss sich dabei immer über den gesamten Innendurchmesser der Kapsel erstrecken, was je nach Bauweise der Kapsel nicht erwünscht ist. Ausserdem sollte die Seitenwand weder Materialschwächungen noch Ausbuchtungen aufweisen.

Durch die EP 1 864 917 ist eine Kapsel bekannt geworden, bei der in einer Vertiefung im Boden eine Perforationsplatte gehalten wird, wobei über der Perforationsplatte eine Verschlussfolie gespannt ist. Unter der Einwirkung eines Innendrucks wird die Verschlussfolie gegen die Perforationsplatte gedrückt, wobei sich Öffnungen bilden, durch welche die Flüssigkeit über die Perforationsplatte strömen kann. Die Flüssigkeit entweicht über den seitlichen, elastisch am Boden der Kapsel anliegenden Rand der Perforationsplatte. Eine derartige Anordnung eignet sich nicht für die lagestabile Aufnahme eines Strömungselements.

Die US 2011/0064852 A1 offenbart die Merkmale des Oberbegriffs des Anspruchs 1.

Es ist daher eine Aufgabe der Erfindung, eine Kapsel der eingangs genannten Art zu schaffen, bei der auch komplex ausgestaltete Strömungselemente lagestabil in der Kapsel gehalten werden können, ohne dass dabei eine Veränderung der Seitenwand erforderlich ist. Diese Aufgabe wird mit einer Kapsel gelöst, welche die Merkmale in Anspruch 1 aufweist.

Dabei weist der Boden eine kreisförmige Aufnahmeschulter auf, an der das Strömungselement lagestabil eingerastet ist. Die Aufnahmeschulter erlaubt dabei eine stabile Lagerung ohne dass die Aussenwand der Kapsel beeinträchtigt wird. Denkbar sind beispielsweise lösbare oder unlösbare Schnappverbindungen. Unter dem Begriff Strömungselement sind dabei alle Komponenten zu verstehen, die von der Flüssigkeit beim Durchlaufen der Kapsel von der Eintrittseite zur Austrittseite durchströmt werden und die das Strömungsverhalten auf irgendeine Weise beeinflussen. Ersichtlicherweise muss es sich dabei nicht zwingend um ein Filterelement handeln.

Besonders vorteilhaft kann die Aufnahme angeordnet werden, wenn der Boden einen Auslaufstutzen mit einer Auslauföffnung aufweist. Derartige Auslaufstutzen sind an sich beispielsweise bereits durch die WO 2009/115475 bekannt. Derartige Auslaufstutzen leiten das Getränk direkt aus der Kapsel in eine Tasse oder in einen anderen Aufnahmebehälter, ohne mit der Getränkezubereitungsmaschine in Kontakt zu kommen. Die Anordnung eines derartigen Stutzens erfordert eine besondere Ausgestaltung des Kapselbodens, wobei sich die Aufnahme oder die Aufnahmeschulter gut integrieren lässt.

Weitere Vorteile können erreicht werden, wenn im Auslaufstutzen eine Prallplatte angeordnet ist. Dadurch kann eine optimale Verwirbelung erzielt werden. Die Prallplatte kann im beliebig geformten Auslaufstutzen so gehalten sein, dass der Flüssigkeitsstrom etwa im rechten Winkel auftrifft und danach über den Aussenrand der Prallplatte abfliesst.

Der Boden weist dabei eine vorzugsweise zylindrische Vertiefung mit einer Seitenwand auf, welche teilweise die Aufnahmeschulter bildet. Die Vertiefung erfüllt dabei eine Doppelfunktion indem sie die Flüssigkeit für den Austritt aus der Kapsel sammelt und gleichzeitig der Aufnahme des Strömungselements dient.

Eine besonders vorteilhafte Montage der Strömungselemente ergibt sich, wenn an der Aufnahme und am Strömungselement korrespondierende Rastelemente angeordnet sind. Dabei kann es sich um umlaufende Nuten und entsprechende Vorsprünge handeln, aber auch nur um einzelne Nocken und Vertiefungen.

Es kann ausserdem zweckmässig sein, wenn am Boden eine Dichtlippe angeordnet ist, welche dichtend am Strömungselement anliegt. Eine derartige Dichtung ist immer dann vorteilhaft, wenn mit einem hohen Betriebsdruck gearbeitet wird und wenn sichergestellt werden muss, dass die Flüssigkeit durch das Strömungselement fliesst und sich nicht einen Weg an der Verbindung zwischen Kapselboden und Strömungselement sucht.

Insbesondere bei Kapseln mit einem Auslaufstutzen ist es weiter vorteilhaft, wenn zwischen dem Strömungselement und der Auslauföffnung des Auslaufstutzens eine zerreissebare oder penetrierbare Folie angeordnet ist. In bestimmten Fällen könnte eine derartige Folie aber auch über einer einfachen Auslauföffnung im Boden angeordnet sein, wie sie z.B. in der eingangs erwähnten EP 1 555 219 gezeigt ist. Durch die Verwendung dieser Folie kann bei entsprechender Materialwahl für den Kapselkörper und für den Deckel ein aromadichter, bzw. ein sauerstoffdichter oder gasdichter Abschluss der Kapsel erzielt werden.

Es ist zweckmässig, wenn der Boden und die Aufnahme rotationssymmetrisch ausgebildet sind und wenn der Durchmesser der Aufnahme oder der Aufnahmeschulter grösser ist als der Radius des Bodens. Bei dieser Dimensionierung ist ein biegesteifer Sitz des Strömungselements im Kapselboden gewährleistet. Dies ist insbesondere bedeutsam, wenn das Strömungselement nach dem Einsetzen in den Kapselkörper weiteren mechanischen Belastungen ausgesetzt ist, wie z.B. beim Füllen der Kapsel und/oder beim Aufsetzen des Deckels.

Wie eingangs erwähnt kann das Strömungselement ganz unterschiedliche Funktionen erfüllen. Es kann sich dabei um ein Filterelement zum Zurückhalten von Feststoffen in der Kapsel handeln. Die einfachste Version eines derartigen Filterelements ist dabei eine Filterplatte mit Filteröffnungen. Mit einer derartigen Filterplatte wird das Innenvolumen der Kapsel je nach Ausgestaltung nur geringfügig reduziert. Die Filteröffnungen können dabei der Substanz in der Kapsel angepasst werden und es ist ausserdem denkbar, dass die Filterplatte zusätzlich noch mit einer Filterschicht aus Vliesmaterial bedeckt ist.

Gemäss einer anderen Ausgestaltung kann das Filterelement ein sich gegen den Deckel erstreckendes Filterrohr mit Filteröffnungen sein. Dieses Filterrohr erstreckt sich dabei tief in das Kapselinnere, womit ersichtlicherweise und je nach Anordnung der Filteröffnungen eine radiale Filterwirkung erzielt werden kann.

Wenn die Filteröffnungen am oberen, dem Deckel zugewandten Ende des Filterrohrs angeordnet sind, kann dadurch ein zusätzlicher Effekt erzielt werden. Dadurch wird ein sogenanntes Nachtropfen verhindert, wobei unmittelbar nach Beendigung des Zubereitungsprozesses oder insbesondere auch bei der Entfernung der gebrauchten Kapsel aus der Maschine weiterhin Flüssigkeit aus der Austrittseite tropft. Bei entsprechender Anordnung der Filteröffnungen am Filterrohr wird dies zuverlässig verhindert. Dabei kann die dem Deckel zugewandte Öffnung des Filterrohrs unmittelbar mit dem Deckel selbst teilweise oder ganz verschlossen sein. Es ist aber auch denkbar, dass die dem Deckel zugewandte Öffnung des Filterrohrs mit einer Filterfolie versehen ist. Der Rohrmantel selbst muss dann nicht zwingend über Filteröffnungen verfügen, weil die Filterfunktion durch die Filterfolie erfüllt wird.

Die unmittelbare teilweise oder ganze Versiegelung des Deckels mit einem in der Kapsel angeordneten Filterrohr oder Überlaufrohr oder mit einem beliebigen anderen Element könnte auch unabhängig von den übrigen Merkmalen der Kapsel sehr vorteilhaft sein. Auf diese Weise dient der Deckel nicht nur zum Verschliessen der durch den Kapselkörper gebildeten Kammer, sondern er trennt auch noch weitere Bereiche innerhalb der Kapsel voneinander ab. Dadurch wird die Fertigung der Kapsel erheblich rationalisiert, wobei der Versiegelungsprozess gut beherrschbar ist. Die Versiegelungstechnik und die dazu erforderlichen Werkstoffe sind dem Fachmann bekannt und geläufig.

Ersichtlicherweise kann das Filterrohr unterschiedliche Durchmesser aufweisen. Die Verbindung mit der Aufnahmeschulter kann über einen umlaufenden, dem Boden zugewandten Kragen oder auch über einen Einrasttopf erfolgen, dessen Öffnung dem Deckel zugewandt ist. Selbstverständlich muss das Filterrohr nicht zwingend einen Kreisquerschnitt aufweisen. Auch mehreckige oder kurvenförmige Querschnittsformen sind denkbar.

Weitere Vorteile können erzielt werden, wenn das dem Boden zugewandte Ende des Filterrohrs mit einem Filterboden mit Filteröffnungen versehen ist. Dadurch bildet das Filterrohr selbst eine Kammer mit wahlweise einem Eintrittsfilter und mit einem Austrittsfilter, oder nur mit einem Austrittsfilter welche Kammer von einer weiteren Ringkammer umgeben ist, welche durch die Seitenwand der Kapsel begrenzt wird. Die Substanz kann zwischen diesen zwei Filtern bzw. über dem einen Filter angeordnet sein und zwar entweder ausschliesslich oder zusätzlich auch noch in der äusseren Ringkammer.

Die Anordnung eines Filterrohrs oder eines Überlaufrohrs innerhalb des Kapselkörpers, das optional am oberen Ende mit einer Filterfolie und am unteren Ende mit einer Filterplatte abgeschlossen ist, kann auch unabhängig von den übrigen Merkmalen der Erfindung sehr vorteilhaft sein. Der Filterboden oder die Filterplatte könnte dabei einstückig mit dem Rohr ausgebildet sein. Die Filterfolie könnte in bestimmten Fällen ebenfalls durch eine Filterplatte ersetzt werden, wobei diese aus fabrikationstechnischen Gründen eventuell eingeschnappt oder eingeschweisst werden müsste. Diese Ausgestaltung würde es sogar ermöglichen, im Filterrohr oder im Überlaufrohr bereits eine Substanz einzuschliessen, bevor dieses in den Kapselkörper eingesetzt wird. Je nach Verwendungszweck der Kapsel könnte dadurch der Herstellungsprozess wesentlich rationalisiert werden.

Das Strömungselement kann aber auch ein sich vom Boden gegen den Deckel erstreckendes Überlaufrohr sein, mit dem keinerlei Filterwirkung erzielt wird. Mit dem Überlaufrohr wird ausschliesslich ein Nachtropfen der Kapsel verhindert und zwar bei Kapseln, bei denen keinerlei Feststoffe in der Kapsel zurückbleiben. Dies ist beispielsweise bei solchen Kapseln der Fall, mit denen heisse Milch oder Milchschaum erzeugt wird. Die Kapsel ist dabei mit einem sterilisierten Milchkonzentrat oder mit Milchpulver gefüllt, das beim Durchströmen mit heissem Wasser in Lösung geht und vollständig aus der Kapsel ausgetragen wird. Auch andere Füllungen mit z.B. Kakao, Teekonzentrat, usw. sind denkbar.

Die Wirkung eines derartigen Überlaufrohrs kann noch dadurch verbessert werden, wenn an seinem oberen, dem Deckel zugewandten Ende wenigstens eine Düsenöffnung angeordnet ist. Mit einer derartigen Düsenöffnung kann beispielsweise eine sehr gute Durchmischung und Schaumbildung erzielt werden.

Alternativ kann am oberen, dem Deckel zugewandten Ende des Überlaufrohrs wenigstens eine geschlossene, unter Druckeinwirkung aufreissbare Sollbruchstelle angeordnet sein. Diese Sollbruchstelle kann entweder am oberen Ende des Rohrmantels oder an einem den Rohrmantel abschliessenden Deckel angeordnet sein. Mittels dieser geschlossenen Sollbruchstelle wird der Kapselinnenraum gegen die Atmosphäre hermetisch abgeschlossen, so dass sich der Einbau einer Berstfolie erübrigt. Die Funktion der Berstfolie wird durch die Sollbruchstelle übernommen, die beispielsweise als Schwächung der Wandstärke ausgebildet sein kann. Unter hydraulischem und/oder pneumatischem Innendruck in der Kapsel reisst die Sollbruchstelle auf und erlaubt ein Einströmen der Flüssigkeit in das Überlaufrohr.

Die Sollbruchstelle kann beispielsweise als Schlitz oder als Kreuzschlitz ausgebildet sein. Auf diese Weise wird nach dem Aufreissen auch noch eine optimale Düsenfunktion zum Aufschäumen und Durchmischen der Flüssigkeit erzielt.

Das Überlaufrohr kann am oberen, dem Deckel der Kapsel zugewandten Ende mit einem Deckel abgeschlossen sein, in welchem eine Düsenöffnung oder eine Sollbruchstelle angeordnet ist, wobei auf diesem Deckel wenigstens ein Nocken als Abstandshalter zum Deckel der Kapsel angeordnet ist. Auf diese Weise kann das Überlaufrohr bis unmittelbar unter den Deckel der Kapsel geführt werden, ohne dass die Gefahr besteht, dass die Öffnung oder die Sollbruchstelle abgedeckt wird. Der Nocken sorgt für einen ausreichenden Abstand zwischen dem Abschlussdeckel des Überlaufrohrs und dem Kapseldeckel. Der Nocken kann aber auch weggelassen werden, wenn keine Gefahr besteht, dass der Deckel der Kapsel den Eintritt der Flüssigkeit in das Überlaufrohr beeinträchtigt.

Die vorstehend beschriebenen Varianten mit der Anordnung einer Sollbruchstelle wären auch bei alternativen Kapseln sehr vorteilhaft, bei denen das Strömungselement nicht erfindungsgemäss lagestabil gehalten ist, sondern auf andere Art und Weise innerhalb der Kapsel angeordnet ist.

Weitere Ausgestaltungen des Strömungselements sind selbstverständlich denkbar. So könnte es sich beim Strömungselement beispielsweise auch um ein mechanisches Überdruckventil handeln, das beim Erreichen eines bestimmten Innendrucks in der Kapsel öffnet. Weiter könnte das Strömungselement beispielsweise auch als Rückhaltekäfig für die Aufnahme bestimmter Substanzen ausgebildet sein. So könnte in einer mit Tee gefüllten Kapsel im Rückhaltekäfig eine Tablette oder eine Weichkapsel mit Zitronenaroma enthalten sein.

Eine weitere vorteilhafte Ausgestaltung der Erfindung besteht darin, dass der Boden der Kapsel einstückig mit einem Auslaufstutzen ausgebildet ist, der eine Auslauföffnung aufweist, wobei im Auslaufstutzen und einstückig mit diesem verbunden ein Prallelement, insbesondere eine Prallplatte angeordnet ist. Bei einer derartigen Anordnung muss über dem Boden der Kapsel nicht zwingend ein von der Flüssigkeit durchströmbares Strömungselement in einer kreisförmigen Aufnahme lagestabil gehalten sein. Der integrierte Auslaufstutzen mit integriertem Prallelement könnte auch bei beliebigen andern Kapseln eingesetzt werden, bei denen der Kapselkörper vorzugsweise als Spritzgussteil hergestellt wird. Mit Hilfe des Prallelements kann eine optimale Durchmischung und Verschäumung der austretenden Flüssigkeit erzielt werden. Durch die einstückige Ausbildung mit dem Auslaufstutzen entfallen aufwändige Montagearbeiten. Das Prallelement kann dabei ganz unterschiedliche Konfigurationen aufweisen.

Besonders vorteilhaft hat das Prallelement jedoch die Form einer Prallplatte, mit einer im rechten Winkel zur Längsmittelachse des Auslaufstutzens gerichteten Prallfläche. Das Prallelement kann aber auch als gegen die Kammer geöffneter Becher ausgebildet sein, wobei der Becherboden die Prallplatte bildet und die Seitenwand des Bechers eine beschränkte Umlenkung des auftreffenden Flüssigkeitsstrahls bewirkt.

Besonders vorteilhaft ist das Prallelement durch seitliche Rippen mit der Innenwand des Auslaufstutzens verbunden. Die Rippen können dabei in regelmässiger Winkelteilung über den Umfang des Prallelements verteilt sein. Vorzugsweise verlaufen diese Rippen parallel zur Längsmittelachse des Auslaufstutzens. Auch eine Schrägstellung dieser Rippen wäre jedoch denkbar, um der austretenden Flüssigkeit einen beschränkten Drall zu vermitteln.

Selbstverständlich könnte auch diese Ausgestaltung des Kapselkörpers mit den vorstehend beschriebenen Einzelelementen kombiniert werden. Insbesondere könnte über dem Auslaufstutzen eine Berstfolie oder eine Berstplatte mit oder ohne Sollbruchstellen angeordnet sein. Auch die Kombination mit beliebigen Filterelementen im Auslaufstutzen oder über dem Auslaufstutzen wäre denkbar.

Weitere Vorteile können erzielt werden, wenn die Folie zum Verschliessen der Auslauföffnung an ihrem Aussenrand auf einem umlaufenden Rand befestigt ist, der einstückig mit dem Boden der Kapsel ausgebildet ist und der innerhalb der Aufnahmeschulter verläuft. Auf diese Weise wird die Folie etwas vom Boden der Kapsel abgehoben, womit der Auslaufstutzen wenigstens teilweise ins Innere der Kapsel verlegt werden kann.

Besonders zweckmässig ist dabei die Folie im Zentrum auf einem Stützkörper befestigt, der koaxial zur Auslauföffnung angeordnet ist. Die Folie ist dabei vorzugsweise zwischen diesem Stützkörper und dem umlaufenden Rand frei gespannt. Die Befestigung der Folie auf dem Stützkörper bewirkt, dass ein Reissen der Folie vom Zentrum aus aber nicht im Zentrum möglich ist. Ausserdem wird durch die Befestigung im Zentrum der Folie eine grössere Spannung vermittelt.

Am Aussenumfang des Stützkörpers können vorzugsweise schlitzförmige Öffnungen angeordnet sein, welche sich von der Auflageebene der Folie gegen den Boden erstrecken. Diese Öffnungen bewirken ebenfalls eine turbulente Strömung, womit die vorstehend beschriebene Prallplatte ganz entfallen kann.

Ferner kann der Stützkörper von einer mit Öffnungen versehenen Prallwand umgeben sein, wobei die Öffnungen der Prallwand radial versetzt zu den Öffnungen des Stützkörpers angeordnet sind und wobei vorzugsweise die Folie auf dem oberen Rand der Prallwand befestigt ist. Mit dieser Anordnung kann noch ein verbessertes Durchmischen und Aufschäumen der Flüssigkeit erzielt werden.

Weitere Vorteile können erzielt werden, wenn das Filterrohr im oberen, dem Deckel zugewandten Bereich über einen Kragen an der Seitenwand der Kapsel abgestützt ist. Dadurch wird das Filterrohr besser zentriert und fixiert und es wird ausserdem unabhängig von der Verschweissung des Deckels eine Ringkammer gebildet, welche um das Filterrohr herum verläuft.

Die Erfindung betrifft auch ein System umfassend eine vorstehend beschriebene Kapsel sowie eine Getränkezubereitungsmaschine. Diese ist mit einer Halterung zur Aufnahme der Kapsel und mit Mitteln zum Durchleiten einer Flüssigkeit durch die Kapsel versehen, wobei wenigstens ein Penetrationselement zum Penetrieren des Deckels der Kapsel an der Halterung angeordnet ist. Die Halterung kann dabei beliebig ausgestaltet sein und sie kann in bestimmten Fällen auch in die Maschine integriert sein, so dass die Kapsel nur noch durch eine Öffnung eingeführt werden muss. Die Flüssigkeit insbesondere heisses Wasser wird mittels einer Pumpe unter einem Druck von bis zu 25 bar der Kapsel zugeführt. Beim Penetrationselement kann es sich um eine Hohlnadel oder um Einstechdorne oder Einstechmesser handeln. Die erfindungsgemässe Kapsel verbessert die Funktion der Maschine erheblich, insbesondere weil nach dem Brühprozess kein Nachtropfen im Halter stattfindet. Ausserdem ist eine präzisere Dosierung der Flüssigkeitsmenge möglich.

Weitere Vorteile und Einzelmerkmale der Erfindung ergeben sich aus der nachfolgenden Beschreibung von Ausführungsbeispielen und aus den Zeichnungen. Es zeigen:
- Figur 1: Einen Querschnitt durch eine erfindungsgemässe Kapsel mit einem als Filterrohr ausgebildeten Strömungselement,
- Figur 2: Einen Querschnitt durch ein alternatives Ausführungsbeispiel mit gleichem Kapselkörper wie gemäss Figur 1, jedoch mit einem kleineren Filterrohr,
- Figur 3: Eine perspektivische Darstellung des Kapselkörpers mit Filterrohr gemäss Figur 1,
- Figur 4: Eine perspektivische Darstellung des Kapselkörpers mit Filterrohr gemäss Figur 2,
- Figur 5: Einen Querschnitt durch ein weiteres Ausführungsbeispiel einer Kapsel mit zusätzlicher Dichtlippe am Kapselboden,
- Figur 6: Eine separate Darstellung des Filterrohrs gemäss Figur 5,
- Figur 7: Das Detail Z gemäss Figur 5 in vergrösserter Darstellung,
- Figur 8: Einen Querschnitt durch ein weiteres Ausführungsbeispiel einer Kapsel mit einem durch eine Filterfolie bedeckten Filterrohr,
- Figur 9: Einen Querschnitt durch ein weiteres Ausführungsbeispiel einer Kapsel mit einem als Überlaufrohr ausgebildeten Strömungselement,
- Figur 10: Eine separate Darstellung des Überlaufrohrs gemäss Figur 9,
- Figur 11: Einen Querschnitt durch ein weiteres Ausführungsbeispiel einer Kapsel mit einem als Filterboden ausgebildeten Strömungselement,
- Figur 12: Einen Querschnitt durch ein weiteres Ausführungsbeispiel einer Kapsel mit einem als Rückhaltekäfig ausgebildeten Strömungselement,
- Figur 13: Eine perspektivische Darstellung eines alternativen Überlaufrohrs mit aufreissbarer Sollbruchstelle,
- Figur 14: Eine perspektivische und geschnittene Darstellung des Überlaufrohrs gemäss Figur 13 in einem Kapselkörper,
- Figur 15: Eine perspektivische Darstellung im Querschnitt durch eine alternative Kapsel, und
- Figur 16: Eine vergrösserte perspektivische Darstellung des Kapselbodens an der Kapsel gemäss Figur 15.

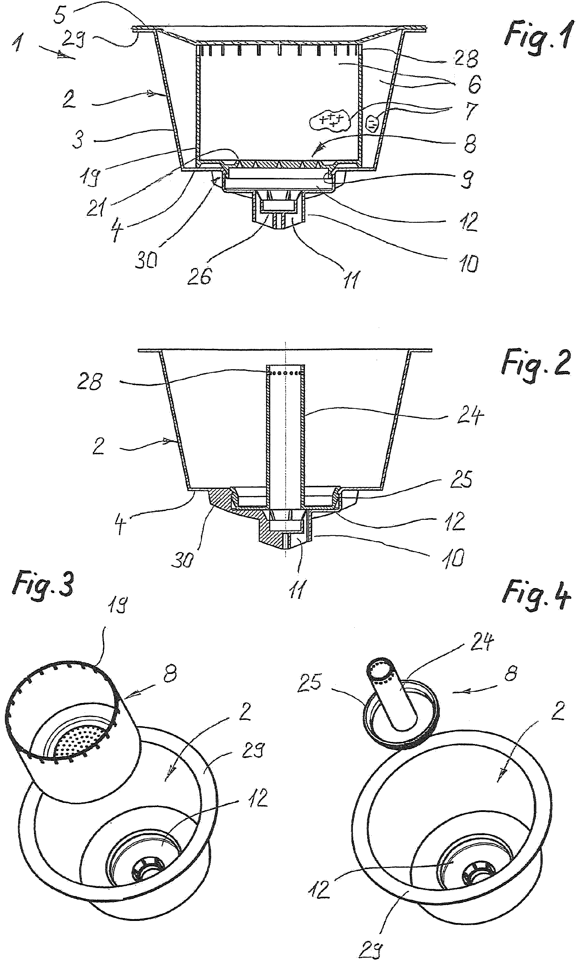

Wie in Figur 1 dargestellt, besteht eine allgemein mit 1 bezeichnete Kapsel aus einem Kapselkörper 2 mit einer hier kegelstumpfförmig ausgebildeten Seitenwand 3 und mit einem Boden 4. Der Kapselkörper 2 ist mit einem Deckel 5 verschlossen, welcher mit einem umlaufenden Rand 29 verbunden ist.

Der Boden 4 ist mit einer hohlzylindrischen Vertiefung 12 versehen, die in einen Auslaufstutzen 10 mit einer Auslauföffnung 11 übergeht. Im Auslaufstutzen ist eine Prallplatte 26 angeordnet, mit welcher eine Durchmischung und Aufschäumung der austretenden Flüssigkeit erreicht werden kann. Der Auslaufstutzen 10 und die Vertiefung 12 sind über sternförmig angeordnete Versteifungsrippen 30 zusätzlich mit dem Boden 4 verbunden.

Der Kapselkörper 2 bildet insgesamt eine Kammer 6, in welcher eine nur symbolisch dargestellte Substanz 7 aufgenommen ist. Diese Substanz kann fest oder flüssig sein und sie kann in verschiedenen Bereichen innerhalb des Kapselkörpers 2 angeordnet sein. Wenn es sich bei der Substanz um einen Feststoff handelt, kann dieser als loses Schüttgut oder als fest gepresster Kuchen in der Kammer angeordnet sein.

An einer Aufnahmeschulter 9, welche hier durch die Seitenwand der Vertiefung 12 gebildet wird, ist ein insgesamt mit 8 bezeichnetes Strömungselement am Boden 4 der Kapsel verankert. Das Strömungselement ist hier ein Filterrohr 19 mit einem Innendurchmesser, der grösser ist als der Innendurchmesser der Vertiefung 12. Am oberen Ende des Filterrohrs sind Filteröffnungen 28 in der Form einer Mehrzahl von Längsschlitzen angeordnet. Diese Filteröffnungen bewirken einerseits ein Zurückhalten von Feststoffen in der äusseren Ringkammer. Andererseits wird durch die Filteröffnungen aber auch eine turbulente Strömung und damit eine gute Durchmischung und Aufschäumung erzielt. Die Filteröffnungen könnten daher auch als Düsenöffnungen bezeichnet werden. Alternativ oder zusätzlich kann eine insbesondere feststoffhaltige Substanz aber auch innerhalb des Filterrohrs angeordnet sein.

Am oberen Ende ist das Filterrohr 19 durch den Deckel 5 abgeschlossen, welcher mit dem oberen Rand des Filterrohrs versiegelt wird. Im Bereich des Bodens 4 ist das Filterrohr 19 mit einem Filterboden 21 versehen, in welchem ebenfalls Filteröffnungen angeordnet sind.

Beim Ausführungsbeispiel gemäss Figur 2 ist der Kapselkörper 2 identisch mit demjenigen gemäss Figur 1. Die Schnittebene ist hier durch eine Versteifungsrippe 30 gelegt, was in der linken Bildhälfte sichtbar ist. Beim eingesetzten Strömungselement handelt es sich ebenfalls um ein Filterrohr 24, das jedoch einen wesentlich geringeren Durchmesser aufweist, als das Filterrohr 19 gemäss Figur 1. Ersichtlicherweise kann sich hier der Rohrmantel nicht am Boden 4 des Kapselkörpers abstützen, wie dies gemäss Figur 1 der Fall ist. Um trotzdem eine stabile und biegesteife Lagerung zu gewährleisten, ist das untere Ende des Filterrohrs 24 einstückig mit einem Einrasttopf 25 versehen, der sich am Boden und an der Seitenwand der Vertiefung 12 abstützt.

Am oberen Ende des Filterrohrs 24 sind wiederum Filteröffnungen 18 angeordnet, welche hier jedoch nicht schlitzförmig, sondern kreisrund ausgebildet sind. Auch hier wird das obere, offene Ende des Filterrohrs 24 mit dem hier nicht dargestellten Deckel versiegelt.

Die Figuren 3 und 4 veranschaulichen nochmals, wie in den gleichen Kapselkörper 2 unterschiedliche Strömungselemente 8 eingesetzt werden können. Die Montage ist relativ einfach, weil keinerlei Schweiss- oder Klebeoperationen erforderlich sind. Die Montage lässt sich ausserdem sehr gut automatisieren. Ersichtlicherweise könnten die Strömungselemente 8 beliebige andere Ausgestaltungen haben, wie nachstehend noch aufgezeigt wird. Es wäre selbstverständlich auch denkbar, das Strömungselement mit dem Kapselkörper zu verschweissen oder zu verkleben.

Anhand der Figuren 3 und 4 mit Verweis auf die Figuren 1 und 2 kann auch nochmals dargestellt werden, dass der Kapselkörper 2 mit der besonderen Anordnung des Auslaufstutzens 10 auch ohne das eingesetzte Strömungselement 8 sehr vorteilhaft sein kann. Aus Figur 1 ist die becherartige Konfiguration der Prallplatte 26 ersichtlich. Dieses Prallelement ist mit Hilfe seitlicher Rippen 30 derart im Auslaufstutzen gehalten, dass ein Ringspalt zwischen der Innenwand des Auslaufstutzens und dem Aussenrand der Prallplatte gebildet wird. Die Prallplatte ist dabei einstückig mit dem Auslaufstutzen ausgebildet. Die Rippen 30 könnten sich ausserhalb des Auslaufstutzens fortsetzen und bis zum Boden 4 geführt sein, was insbesondere aus Figur 2 ersichtlich ist.

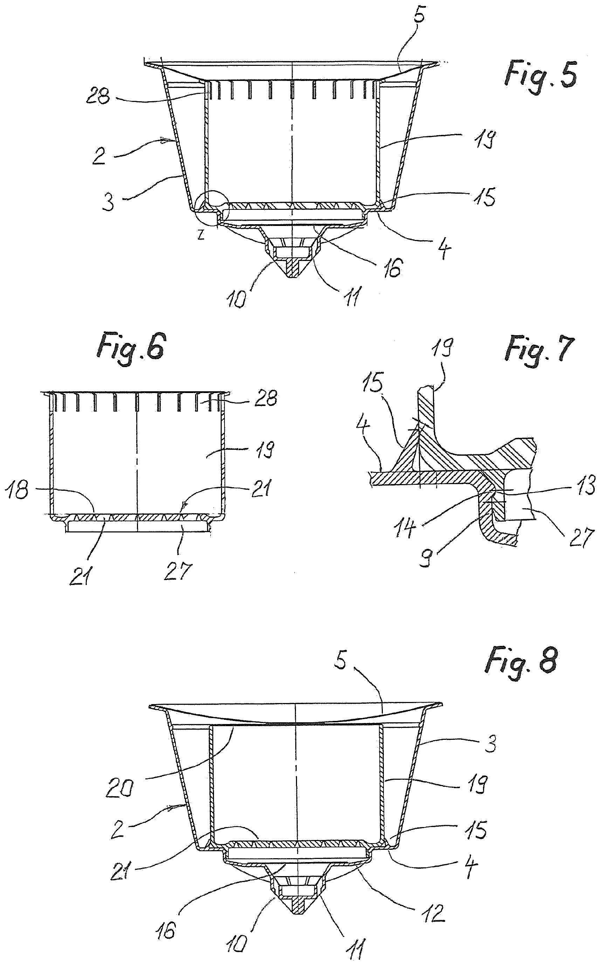

Die Kapsel gemäss den Figuren 5 bis 7 ist ähnlich aufgebaut wie diejenige gemäss Figur 1. Der Kapselkörper 2 verfügt jedoch am Boden 4 über eine umlaufende Dichtlippe 15, welche dichtend am Filterrohr 19 anliegt. Dadurch wird verhindert, das Flüssigkeit aus der äusseren Ringkammer direkt zur Auslauföffnung gelangen kann, ohne die Filteröffnungen 28 zu durchlaufen.

Das Filterrohr 19 selbst ist sehr ähnlich aufgebaut, wie dasjenige gemäss Figur 1. Aus Figur 6 ist der umlaufende Kragen 27 ersichtlich, der an der Aufnahmeschulter 9 anliegt und sich dort verrastet.

Einzelheiten der Verrastung und der Abdichtung sind aus Figur 7 besser ersichtlich. Der umlaufende Kragen 27 ist mit einer umlaufenden äusseren Rastnut 13 versehen. Diese rastet über eine umlaufende Rastlippe 14 an der Aufnahmeschulter 9. Die Dichtlippe 15 ist in einem Winkel gegen das Filterrohr 19 geneigt. Sowohl der Kapselkörper 2, als auch das Filterrohr 19 sind aus einem geeigneten Kunststoffmaterial hergestellt. Es kann sich dabei um Spritzgussteile oder auch um tiefgezogene Teile handeln.

Das Ausführungsbeispiel gemäss Figur 8 entspricht bezüglich Kapselkörper 2 und Filterrohr 19 demjenigen gemäss Figur 5. Die dem Deckel 5 zugewandte Öffnung des Filterrohrs ist jedoch nicht mit dem Deckel selbst abgeschlossen. Ausserdem verfügt das Filterrohr am oberen Ende über keinerlei Filteröffnungen 28 im Rohrmantel. Die Filterwirkung wird hier mit einer Filterfolie 20 erzielt, welche über die Rohröffnung gespannt ist. Am Boden der Vertiefung 12 ist über der Auslauföffnung 11 eine Berstfolie 16 gespannt, welche den Innenraum der Kapsel hermetisch abschliesst. Unter Druckeinwirkung reisst diese Folie auf und gibt den Weg frei für die Flüssigkeit. Eine derartige Folie ist auch beim Ausführungsbeispiel gemäss Figur 5 vorgesehen und selbstverständlich wären derartige Folien auch bei den Ausführungsbeispielen gemäss den Figuren 1 und 2 denkbar.

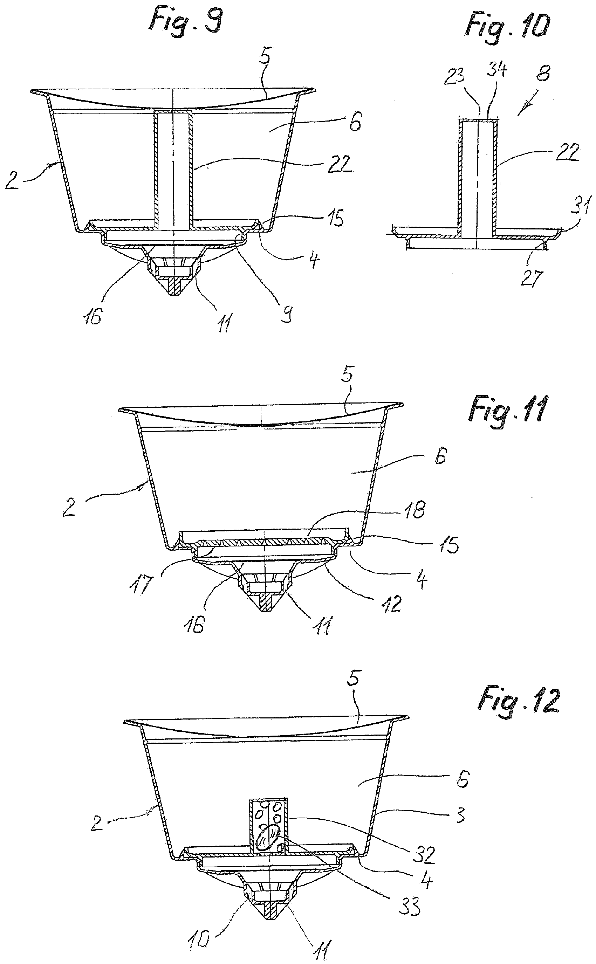

Das Ausführungsbeispiel gemäss den Figuren 9 und 10 zeigt eine alternative Ausgestaltung eines Strömungselements. Dieses wird nicht durch ein Filterrohr, sondern durch ein Überlaufrohr 22 gebildet. Dessen Verankerung im Kapselkörper 2 erfolgt jedoch ähnlich, wie beim Ausführungsbeispiel gemäss Figur 5. Auch hier ist eine Dichtlippe 15 vorgesehen, welche sich an einen aufgebogenen Rand 31 des Überlaufrohrs anlegt. Die eigentliche Verankerung erfolgt am umlaufenden Kragen 27.

Der Mantel des Überlaufrohrs erstreckt sich bis unmittelbar unter den Deckel 5. Das Rohrende ist mit einem Deckel 34 abgeschlossen, in welchem eine zentrale Düsenöffnung 23 angeordnet ist. Eine in der Kammer 6 vorhandene und/oder eingespritzte Flüssigkeit muss somit ersichtlicherweise die Düsenöffnung 23 passieren, bevor sie über die Auslauföffnung 11 die Kapsel verlassen kann. Die Düsenöffnung kann kreisförmig oder schlitzförmig ausgebildet sein, wobei selbstverständlich beliebige andere Geometrien denkbar sind. Da dies in der Regel unter einem hohen Druck stattfindet, wird die Flüssigkeit intensiv durchmischt und aufgeschäumt. Das Überlaufrohr verhindert ausserdem ein Nachtropfen nach Gebrauch der Kapsel, weil in der Kammer 6 zurückbleibende Restflüssigkeit die Düsenöffnung nicht mehr passieren kann.

Beim Ausführungsbeispiel gemäss Figur 11 ist das Strömungselement praktisch auf eine einfache Filterplatte 17 mit Filteröffnungen 18 reduziert. Die Verankerung dieser Filterplatte im Kapselkörper 2 erfolgt jedoch auf gleiche Weise wie beim Ausführungsbeispiel gemäss Figur 9.

Beim Ausführungsbeispiel gemäss Figur 12 besteht das Strömungselement aus einem Rückhaltekäfig 32, welcher durch einen mit Öffnungen versehenen Hohlzylinder gebildet wird. Im Rückhaltekäfig kann beispielsweise eine mit einem Aromastoff gefüllte Weichkapsel 33 angeordnet sein, die sich beim Durchströmen mit heisser Flüssigkeit auflöst. Die Verankerung am Boden 4 des Kapselkörpers 2 ist identisch gelöst wie bei den Ausführungsbeispielen gemäss den Figuren 9 und 11. Am unteren Ende des Rückhaltekäfigs 32 kann ein Lochboden, eine Lochfolie oder ein Vlies zum Halten der Weichkapsel angeordnet sein.

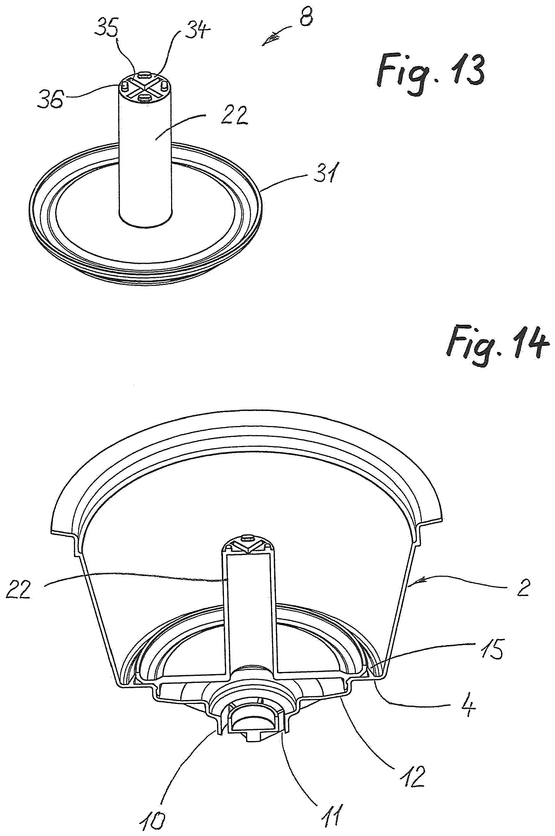

Die Figuren 13 und 14 zeigen ein alternatives Ausführungsbeispiel eines Überlaufrohrs 22, das an seinem oberen Ende mit einem Deckel 34 abgeschlossen ist. Im Deckel ist eine kreuzschlitzförmige Sollbruchstelle 35 angeordnet, wobei es sich um eine Schwächung der Wandstärke handelt. Beim Auftreten eines Überdrucks reisst diese Sollbruchstelle auf und es entsteht ersichtlicherweise eine kreuzschlitzförmige Öffnung, welche auch eine Düsenwirkung ausübt. Selbstverständlich wäre auch eine andere geometrische Ausbildung der Sollbruchstelle denkbar. Insbesondere könnte diese auch am seitlichen Mantel des Überlaufrohrs 22 angeordnet sein, oder sich bis in diesen Mantel erstrecken.

Beim gezeigten Ausführungsbeispiel sind auf dem Abschlussdeckel 34 gleichmässig über den Umfang verteilt insgesamt vier Nocken 36 angeordnet. Diese sorgen dafür, dass der hier nicht dargestellte Deckel der Kapsel die freigelegte Öffnung verschliessen kann. Diese Nocken wären selbstverständlich auch dann zweckmässig, wenn im Abschlussdeckel bereits durchgehende Öffnungen angeordnet sind, wie z.B. im Ausführungsbeispiel gemäss den Figuren 9 und 10.

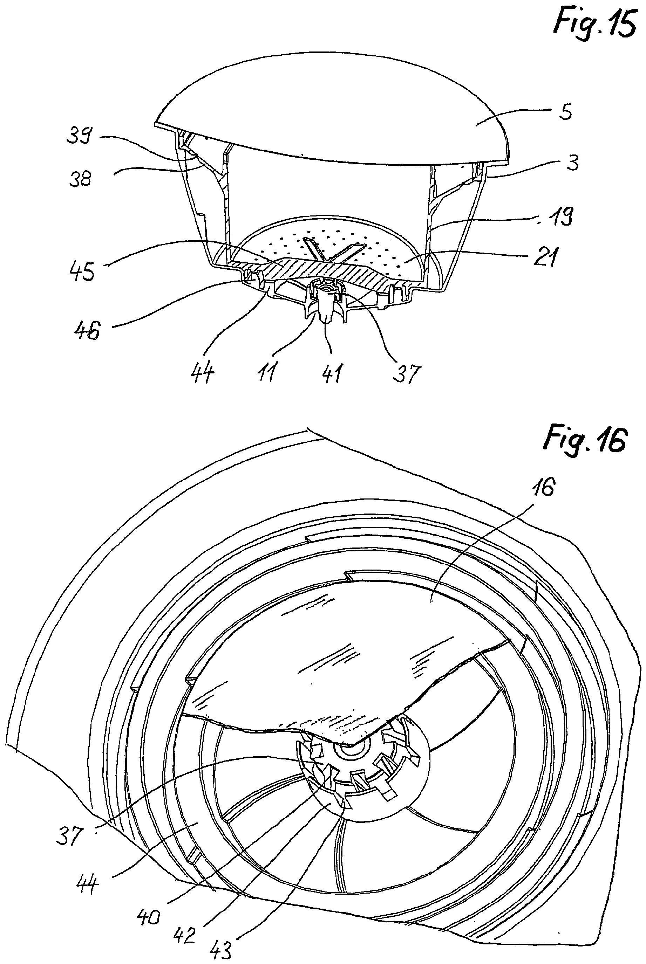

Die Kapsel gemäss den Figuren 15 und 16 unterscheidet sich von den vorstehend beschriebenen Ausführungsbeispielen einerseits durch eine alternative Ausgestaltung des Filterrohrs 19 und andererseits durch eine alternative Ausgestaltung der Auslaufpartie. Das Filterrohr 19 ist als ein gegen oben geöffneter Aufnahmebecher ausgebildet, der auf die gleiche Weise in den Boden der Kapsel eingerastet ist, wie bei den vorstehend beschriebenen Ausführungsbeispielen. Der mit Öffnungen versehene Filterboden 21 ist dabei durch sternartige Verstärkungsrippen 45 verstärkt. Im oberen, dem Deckel 5 zugewandten Bereich des Filterrohrs ist auf der Aussenseite ein trompetenartiger Kragen 38 angeordnet, der sich an der Seitenwand 3 abstützt und der mit Öffnungen 39 versehen sein kann. Der obere Rand des Filterrohrs 19 erstreckt sich etwas über den Kragen 38 hinaus, jedoch nicht bis zur Unterseite des Deckels 5. Auf diese Weise kann eine im Filterrohr 19 aufgenommene Substanz auch in den Ringraum über dem Kragen 38 eindringen, jedoch nicht in den Ringraum unterhalb des Kragens 38. Dieser Ringraum dient als eine Art Druckausgleichskammer, die einen zusätzlichen Luftvorrat aufnimmt.

Innerhalb der eigentlichen Rastverbindung zwischen dem Boden der Kapsel und dem Filterrohr 19 ist eine umlaufende Zwischenrippe 46 angeordnet, die auch als vertikale Begrenzung für das Filterrohr 19 dient. Konzentrisch innerhalb dieser Zwischenrippe ist ein umlaufender Rand 44 einstückig in den Boden der Kapsel integriert. Dessen Oberseite liegt auf einer etwas tieferen Ebene als die Oberseite der Zwischenrippe 46.

Die in Figur 15 aus Gründen der besseren Übersichtlichkeit nicht dargestellte Verschlussfolie 16 ist an ihrem Aussenumfang auf der Oberseite des umlaufenden Randes fixiert. Die teilweise aufgebrochene Folie ist in Figur 16 dargestellt. Im Zentrum ist die Folie fest mit einem Stützkörper 37 verbunden, der koaxial zur Auslauföffnung 11 verläuft und dessen Oberseite etwa in der Ebene der Oberseite des umlaufenden Randes 44 liegt. Der Stützkörper 37 ist über seinen Umfang mit Schlitzen versehen, welche sich von der Ebene der Folie 16 nach unten erstrecken. Im Zentrum des hohlen Stützkörpers 37 ist ein Strömungselement 41 angeordnet, das in die Auslauföffnung 11 hineinragt.

Wie insbesondere aus Figur 16 ersichtlich ist, wird der Stützkörper 37 von einer Prallwand 42 umgeben, in welcher ebenfalls Schlitze 43 angeordnet sind. Die Prallwand hat dabei das Aussehen einer Zinne mit darin angeordneten Zinnenscharten. Die Schlitze 43 in der Prallwand sind radial versetzt zu den Schlitzen 40 im Stützkörper 37 angeordnet, womit eine zusätzliche Verwirbelung der Strömung erzwungen wird. Beim vorliegenden Ausführungsbeispiel sind im Stützkörper und in der Prallwand je acht Schlitze angeordnet. Diese Anzahl könnte selbstverständlich je nach Anwendungsfall geändert werden und es wäre ausserdem denkbar, dass die Anzahl Schlitze im Stützkörper nicht mit der Anzahl Schlitze in der Prallwand übereinstimmt.

Die Folie 16 ist sowohl auf der Oberfläche des Stützkörpers 37, als auch auf dem oberen Rand der Prallwand 42 fixiert, beispielsweise aufgeschweisst oder aufgesiegelt.

Auch bei diesem Ausführungsbeispiel besteht der Kapselkörper und das Filterrohr vorzugsweise aus Kunststoffmaterial, währen der Deckel 5 aus einer Aluminiumfolie oder einer Kunststofffolie oder auch aus einem Laminat bestehen kann.

## Patentansprüche

1. Kapsel (1) mit einem vorzugsweise rotationssymmetrisch ausgebildeten Kapselkörper (2) mit einer Seitenwand (3) und mit einem einstückig mit dieser ausgebildeten Boden (4), sowie mit einem den Kapselkörper abdeckenden Deckel (5) zur Bildung wenigstens einer Kammer (6), welche eine Substanz (7) für die Zubereitung eines flüssigen Lebensmittels enthält, wobei für die Durchleitung einer Flüssigkeit durch die Kammer (6) der Deckel (5) eine Eintrittseite und der Boden (4) eine Austrittseite bildet, wobei über dem Boden (4) ein separates, von der Flüssigkeit durchströmbares Strömungselement (8) in der Kapsel gehalten ist, wobei der Boden (4) eine kreisförmige Aufnahmeschulter (9) aufweist, an der das Strömungselement (8) lagestabil eingerastet ist, wobei der Boden (4) eine Vertiefung (12) mit einer Seitenwand aufweist, welche teilweise die Aufnahmeschulter (9) bildet, **dadurch gekennzeichnet, dass** die Vertiefung (12) zylindrisch ist.

2. Kapsel nach Anspruch 1, **dadurch gekennzeichnet, dass** der Boden (4) einen Auslaufstutzen (10) mit einer Auslauföffnung (11) aufweist.

3. Kapsel nach Anspruch 1 oder 2, **dadurch gekennzeichnet, dass** an der Aufnahmeschulter (9) und am Strömungselement (8) korrespondierende Rastelemente (13, 14) angeordnet sind.

4. Kapsel nach Anspruch 2 oder Anspruch 2 und 3, **dadurch gekennzeichnet, dass** zwischen dem Strömungselement (8) und der Auslauföffnung (11) eine zerreissbare oder penetrierbare Folie (16) angeordnet ist.

5. Kapsel nach einem der Ansprüche 1 bis 4, **dadurch gekennzeichnet, dass** der Boden (4) und die Aufnahmeschulter (9) rotationssymmetrisch ausgebildet sind und dass der Durchmesser der Aufnahmeschulter (9) grösser ist als der Radius des Bodens (4) .

6. Kapsel nach einem der Ansprüche 1 bis 5, **dadurch gekennzeichnet, dass** das Strömungselement (8) zum Zurückhalten von Feststoffen in der Kapsel ein Filterelement (17, 19, 24) ist.

7. Kapsel nach Anspruch 6, **dadurch gekennzeichnet, dass** das Filterelement eine Filterplatte (17) mit Filteröffnungen (18) ist.

8. Kapsel nach Anspruch 6, **dadurch gekennzeichnet, dass** das Filterelement ein sich gegen den Deckel erstreckendes Filterrohr (19, 24) mit Filteröffnungen (18, 28) ist.

9. Kapsel nach Anspruch 8, **dadurch gekennzeichnet, dass** die Filteröffnungen (28) am oberen, dem Deckel (5) zugewandten Ende des Filterrohrs (19, 24) angeordnet sind und dass die Öffnung des Filterrohrs mit dem Deckel (5) teilweise oder ganz verschlossen ist.

10. Kapsel nach Anspruch 8, **dadurch gekennzeichnet, dass** die dem Deckel (5) zugewandte Öffnung des Filterrohrs (19, 24) mit einer Filterfolie (20) versehen ist.

11. Kapsel nach einem der Ansprüche 8 bis 10, **dadurch gekennzeichnet, dass** das dem Boden (4) zugewandte Ende des Filterrohrs (19, 24) mit einem Filterboden (21) mit Filteröffnungen (18) versehen ist.

12. Kapsel nach einem der Ansprüche 1 bis 5, **dadurch gekennzeichnet, dass** das Strömungselement (8) ein sich vom Boden gegen den Deckel (5) erstreckendes Überlaufrohr (22) ist.

13. Kapsel nach Anspruch 12, **dadurch gekennzeichnet, dass** am oberen, dem Deckel (5) zugewandten Ende des Überlaufrohrs (22) wenigstens eine Düsenöffnung (23) angeordnet ist.

14. Kapsel nach Anspruch 12, **dadurch gekennzeichnet, dass** am oberen, dem Deckel (5) zugwandten Ende des Überlaufrohrs (22) wenigstens eine geschlossene, unter Druckeinwirkung aufreissbare Sollbruchstelle (35) angeordnet ist.

15. Kapsel nach Anspruch 2 und einem der Ansprüche 3 bis 14, **dadurch gekennzeichnet, dass** im Auslaufstutzen (10) ein Prallelement, insbesondere eine Prallplatte (26) angeordnet ist.

16. Kapsel nach Anspruch 15, **dadurch gekennzeichnet, dass** das Prallelement als gegen die Kammer (6) geöffneter Becher ausgebildet ist.

17. Kapsel nach Anspruch 4 und einem der Ansprüche 5 bis 16, **dadurch gekennzeichnet, dass** die Folie (16) an ihrem Aussenrand auf einem umlaufenden Rand (44) befestigt ist, der einstückig mit dem Boden (4) der Kapsel ausgebildet ist und der innerhalb der Aufnahmeschulter (9) verläuft.

18. Kapsel nach Anspruch 17, **dadurch gekennzeichnet, dass** die Folie (16) im Zentrum auf einem Stützkörper (37) befestigt ist, der koaxial zur Auslauföffnung (11) angeordnet ist.

19. Kapsel nach Anspruch 18, **dadurch gekennzeichnet, dass** am Aussenumfang des Stützkörpers (37) vorzugsweise schlitzförmige Öffnungen (40) angeordnet sind, welche sich von der Auflageebene der Folie (16) gegen den Boden (4) erstrecken.

20. Kapsel nach Anspruch 19, **dadurch gekennzeichnet, dass** der Stützkörper (37) von einer mit Öffnungen (43) versehenen Prallwand (42) umgeben ist, wobei die Öffnungen (43) der Prallwand (42) radial versetzt zu den Öffnungen (40) des Stützkörpers (37) angeordnet sind und wobei vorzugsweise die Folie (16) auf dem oberen Rand der Prallwand (42) befestigt ist.

21. Kapsel nach Anspruch 8 und einem der Ansprüche 9 bis 20, **dadurch gekennzeichnet, dass** das Filterrohr (19) im oberen, dem Deckel (5) zugeordneten Bereich über einen Kragen (38) an der Seitenwand (3) abgestützt ist.

22. System umfassend eine Kapsel (1) nach einem der Ansprüche 1 bis 21 und eine Getränkezubereitungsmaschine mit einer Halterung zur Aufnahme der Kapsel und mit Mitteln zum Durchleiten einer Flüssigkeit durch die Kapsel, wobei wenigstens ein Penetrationselement zum Penetrieren des Deckels (5) der Kapsel an der Halterung angeordnet ist.

## Claims

1. Capsule (1) having a preferably rotationally symmetrical capsule body (2) with a side wall (3) and with a base (4) formed in one piece with the latter, and also having a cover (5), which covers the capsule body and is intended for forming at least one chamber (6), which contains a substance (7) for the preparation of a liquid food, wherein the cover (5) forms an entry side, and the base (4) forms an exit side, for the passage of a liquid through the chamber (6), wherein a separate flow element (8), through which the liquid can flow, is retained in the capsule (1), above the base (4), wherein the base (4) has a circular accommodating shoulder (9), on which the flow element (8) is latched in in a positionally stable manner, wherein the base (4) has a depression (12) with a side wall, this to some extent forming the accommodating shoulder (9), **characterized in that** the depression is cylindrical.

2. Capsule according to Claim 1, **characterized in that** the base (4) has an outflow connector (10) with an outflow opening (11).

3. Capsule according to Claim 1 or 2, **characterized in that** corresponding latching elements (13, 14) are arranged on the accommodating shoulder (9) and on the flow element (8).

4. Capsule according to Claim 2 or Claims 2 and 3, **characterized in that** a tearable or penetrable film (16) is arranged between the flow element (8) and the outflow opening (11).

5. Capsule according to one of Claims 1 to 4, **characterized in that** the base (4) and the accommodation shoulder (9) are rotationally symmetrical, and **in that** the diameter of the accommodating shoulder (9) is greater than the radius of the base (4).

6. Capsule according to one of Claims 1 to 5, **characterized in that** the flow element (8) is a filter element (17, 19, 24) for holding back solids in the capsule.

7. Capsule according to Claim 6, **characterized in that** the filter element is a filter plate (17) with filter openings (18).

8. Capsule according to Claim 6, **characterized in that** the filter element is a filter tube (19, 24), which extends towards the cover and has filter openings (18, 28).

9. Capsule according to Claim 8, **characterized in that** the filter openings (28) are arranged at the upper end of the filter tube (19, 24), said upper end being directed towards the cover (5), and **in that** the opening of the filter tube is partially or wholly closed by the cover (5).

10. Capsule according to Claim 8, **characterized in that** the opening of the filter tube (19, 24), said opening being directed towards the cover (5), is provided with a filter film (20).

11. Capsule according to one of Claims 8 to 10, **characterized in that** that end of the filter tube (19, 24) which is directed towards the base (4) is provided with a filter base (21) with filter openings (18).

12. Capsule according to one of Claims 1 to 5, **characterized in that** the flow element (8) is an overflow tube (22), which extends from the base towards the cover (5).

13. Capsule according to Claim 12, **characterized in that** at least one nozzle opening (23) is arranged at the upper end of the overflow tube (22), said upper end being directed towards the cover (5).

14. Capsule according to Claim 12, **characterized in that** at least one closed predetermined breaking point (35), which can be torn open under the action of pressure, is arranged at the upper end of the overflow tube (22), said upper end being directed towards the cover (5).

15. Capsule according to Claim 2 and one of Claims 3 to 14, **characterized in that** a baffle element, in particular a baffle plate (26), is arranged in the outflow connector (10).

16. Capsule according to Claim 15, **characterized in that** the baffle element is designed in the form of a cup which is open towards the chamber (6).

17. Capsule according to Claim 4 and one of Claims 5 to 16, **characterized in that** the film (16) is fastened, along its outer periphery, on an encircling periphery (44) which is formed in one piece with the base (4) of the capsule and runs within the accommodating shoulder (9).

18. Capsule according to Claim 17, **characterized in that** the film (16) is fastened centrally on a supporting body (37), which is arranged coaxially in relation to the outflow opening (11).

19. Capsule according to Claim 18, **characterized in that** preferably slit-form openings (40) are arranged on the outer circumference of the supporting body (37) and extend from the bearing plane of the film (16) towards the base (4).

20. Capsule according to Claim 19, **characterized in that** the supporting body (37) is enclosed by a baffle wall (42) provided with openings (43), wherein the openings (43) of the baffle wall (42) are offset radially in relation to the openings (40) of the supporting body (37), and wherein preferably the film (16) is fastened on the upper periphery of the baffle wall (42).

21. Capsule according to Claim 8 and one of Claims 9 to 20, **characterized in that** in the upper region, which is assigned to the cover (5), the filter tube (19) is supported on the side wall (3) via a collar (38).

22. System comprising a capsule (1) according to one of Claims 1 to 21 and a beverage-making machine having a holder for accommodating the capsule and having means for passing a liquid through the capsule, wherein at least one penetration element for penetrating the cover (5) of the capsule is arranged on the holder.

## Revendications

1. Capsule (1) comprenant un corps de capsule (2) conçu de préférence à symétrie de rotation et pourvu d'une paroi latérale (3) et d'un fond (4) formé d'une seule pièce avec celle-ci, ainsi que d'un couvercle (5) recouvrant le corps de capsule et destiné à former au moins une chambre (6) qui contient une substance (7) destinée à la préparation d'un aliment liquide, le couvercle (5) formant un côté entrée et le fond (4) formant un côté sortie pour permettre le passage d'un liquide à travers la chambre (6), un élément d'écoulement séparé (8), à travers lequel le liquide peut s'écouler, étant maintenu dans la capsule (1) au-dessus du fond (4), le fond (4) comportant un épaulement de réception circulaire (9) sur lequel l'élément d'écoulement (8) est encliqueté de manière stable en position, le fond (4) comportant un évidement (12) pourvu d'une paroi latérale qui forme en partie l'épaulement de réception (9), **caractérisée en ce que** l'évidement est cylindrique.

2. Capsule selon la revendication 1, **caractérisée en ce que** le fond (4) comporte une buse de sortie (10) pourvue d'une ouverture de sortie (11).

3. Capsule selon l'une des revendications 1 à 2, **caractérisée en ce que** des éléments d'encliquetage (13, 14) correspondants sont disposés au niveau de l'épaulement de réception (9) et de l'élément d'écoulement (8).

4. Capsule selon la revendication 2 et les revendications 2 et 3, **caractérisée en ce qu'**un film déchirable ou pénétrable (16) est disposé entre l'élément d'écoulement (8) et l'ouverture de sortie (11) .

5. Capsule selon l'une des revendications 1 à 4, **caractérisée en ce que** le fond (4) et l'épaulement de réception (9) sont conçus à symétrie de rotation et **en ce que** le diamètre de l'épaulement de réception (9) est supérieur au rayon du fond (4).

6. Capsule selon l'une des revendications 1 à 5, **caractérisée en ce que** l'élément d'écoulement (8) est un élément de filtration (17, 19, 24) destiné à retenir les matières solides situées dans la capsule.

7. Capsule selon la revendication 6, **caractérisée en ce que** l'élément de filtration est une plaque de filtration (17) pourvue d'ouvertures de filtration (18) .

8. Capsule selon la revendication 6, **caractérisée en ce que** l'élément de filtration est un tube de filtration (19, 24) s'étendant vers le couvercle et pourvu d'ouvertures de filtration (18, 28).

9. Capsule selon la revendication 8, **caractérisée en ce que** les ouvertures de filtration (28) sont disposées à l'extrémité supérieure, dirigée vers le couvercle (5), du tube de filtration (19, 24) et **en ce que** l'ouverture du tube de filtration est partiellement ou complètement fermée par le couvercle (5).

10. Capsule selon la revendication 8, **caractérisée en ce que** l'ouverture, dirigée vers le couvercle (5), du tube de filtration (19, 24) est munie d'un film de filtration (20).

11. Capsule selon l'une des revendications 8 à 10, **caractérisée en ce que** l'extrémité, dirigée vers le fond (4), du tube de filtration (19, 24) est munie d'un fond de filtration (21) pourvu d'ouvertures de filtration (18).

12. Capsule selon l'une des revendications 1 à 5, **caractérisée en ce que** l'élément d'écoulement (8) est un tube de trop-plein (22) s'étendant du fond vers le couvercle (5).

13. Capsule selon la revendication 12, **caractérisée en ce qu'**au moins une ouverture de buse (23) est disposée à l'extrémité supérieure, dirigée vers le couvercle (5), du tube de trop-plein (22).

14. Capsule selon la revendication 12, **caractérisée en ce qu'**au moins un point de rupture (35), fermé et déchirable sous l'effet de la pression, est disposé à l'extrémité supérieure, dirigée vers le couvercle (5), du tube de trop-plein (22).

15. Capsule selon la revendication 2 et l'une des revendications 3 à 14, **caractérisée en ce qu'**un élément déflecteur, notamment une plaque déflectrice (26), est disposé dans la buse de sortie (10).

16. Capsule selon la revendication 15, **caractérisée en ce que** l'élément déflecteur est conçu comme une coupelle ouverte vers la chambre (6).

17. Capsule selon la revendication 4 et l'une des revendications 5 à 16, **caractérisée en ce que** le film (16) est fixé, au niveau de son bord extérieur, sur un bord périphérique (44) qui est conçu d'une pièce avec le fond (4) de la capsule et qui s'étend à l'intérieur de l'épaulement de réception (9).

18. Capsule selon la revendication 17, **caractérisée en ce que** le film (16) est fixé au centre sur un corps de support (37) qui est disposé coaxialement à l'ouverture de sortie (11).

19. Capsule selon la revendication 18, **caractérisée en ce que** des ouvertures (40) de préférence en forme de fentes, lesquelles s'étendent depuis le plan d'appui du film (16) vers le fond (4), sont ménagées sur la périphérie extérieure du corps de support (37).

20. Capsule selon la revendication 19, **caractérisée en ce que** le corps de support (37) est entouré d'une paroi déflectrice (42) munie d'ouvertures (43), les ouvertures (43) de la paroi déflectrice (42) étant ménagées de manière décalée radialement par rapport aux ouvertures (40) du corps de support (37) et de préférence le film (16) étant fixé au bord supérieur de la paroi déflectrice (42).

21. Capsule selon la revendication 8 et l'une des revendications 9 à 20, **caractérisée en ce que**, dans la zone supérieure associée au couvercle (5), le tube de filtration (19) est supporté par un rebord (38) situé au niveau de la paroi latérale (3).

22. Système comprenant une capsule (1) selon l'une des revendications 1 à 21 et une machine de préparation de boisson et pourvu d'un support destiné à recevoir la capsule et de moyens permettant de faire passer un liquide à travers la capsule, au moins un élément de pénétration destiné à pénétrer dans le couvercle (5) de la capsule étant disposé au niveau du support.
